# EUROPÄISCHE PATENTSCHRIFT

(11) **EP 1 877 271 B1**
(45) Veröffentlichungstag und Bekanntmachung des Hinweises auf die Patenterteilung: **18.08.2010**
(21) Anmeldenummer: 06742274.1
(22) Anmeldetag: 25.04.2006
(51) Int. Cl.: B60J 10/12, B60J 10/00

(54) **VORRICHTUNG ZUM DICHTEN UND DÄMPFEN**
APPARATUS FOR SEALING AND DAMPING
DISPOSITIF D'ÉTANCHÉITÉ ET D'AMORTISSEMENT

(30) Priorität: 29.04.2005 DE 202005006878 U
(43) Veröffentlichungstag der Anmeldung: 16.01.2008
(73) Patentinhaber: Webasto AG, 82131 Stockdorf (DE)
(72) Erfinder: OERKE, Philipp, 81479 München (DE); NOLLES, Dennis, 81245 München (DE)
(86) Internationale Anmeldenummer: PCT/DE2006/000731
(87) Internationale Veröffentlichungsnummer: WO 2006/116970

(56) Entgegenhaltungen:
- EP-A- 0 976 596
- EP-A- 1 063 113
- EP-A- 1 378 388
- DE-A1- 3 921 381
- DE-A1- 4 018 745
- DE-A1- 10 246 753
- US-A- 6 138 338
- US-A1- 2005 001 458

## Beschreibung

Die Erfindung betrifft eine Vorrichtung zum Dichten und Dämpfen.

Es ist bekannt, Öffnungen in Kraftfahrzeugen, die insbesondere mit Türen, Fenstern oder Schiebedächern verschlossen werden, mit Dichtungen derart auszurüsten, dass zum einen kein Wasser in den Innenraum drückt und zum anderen auch Geräusche möglichst aus dem Fahrzeuginnenraum ferngehalten werden.

Übliche Dichtungen besitzen beispielsweise einen Hartbereich mit einem Aufsteckbereich, mit dem die Dichtung auf einen Karosseriefalz aufgesteckt werden kann, sowie einen Weichbereich, der insbesondere als Vollprofilmoosgummidichtung oder Hohlprofildichtung mit einer Dichtkammer ausgebildet ist.

Aus der DE 101 51 481 A1 ist eine Dichtung mit einer Hohlkammer bekannt, wobei die Hohlkammer innen eine Reihe paralleler Rillen besitzt. Die Rillen sind derart konzipiert, dass die Schallwellen, die in die Hohlkammer gelangen, durch mehrfache Reflexion gedämpft werden sollen. Zusätzlich zu dieser Funktion soll diese Dichtung Energie beim Zusammendrücken der Hohlkammer und insbesondere beim Zuschlagen einer Tür absorbieren. Hierzu sieht diese Dichtung mindestens zwei einander gegenüberliegende elastische Stege und/oder Nasen vor, die beim Zusammendrücken der Hohlkammer aneinander reiben und/oder sich gegenseitig verformen. Zusätzlich zur Dichtwirkung der Dichtung, die sich in der Bewegungsrichtung der abzudichtenden Teile entfaltet, soll somit auch in der Bewegungsrichtung der beiden zu dichtenden Teile, eine Dämpfung erfolgen. Die Richtung der Dämpfung und die Richtung der Dichtung fallen hierbei zusammen.

Aus der US 6,099,068 ist eine Dichtungsanordnung zur Herbeiführung einer Dichtung zwischen einem Türrahmen einer Kraftfahrzeugtür und dem Karosseriefalz, der die Türöffnung umgibt, bekannt. Um die Dichtwirkung zu verbessern und insbesondere den Türaufschlag zu absorbieren und eine höhere Rückstellkraft zu erzeugen, ist es vorgesehen, das Dichtungsprofil derart zu verändern, dass statt eines einzigen Hohlprofils ein zum Türrahmen hin weisendes Hohlprofil und zwischen diesem Hohlprofil und dem Dichtungskörper, eine weitere Hohlkammer vorgesehen ist. Eine einzige Hohlprofilkammer wird dabei sozusagen in zwei Hohlprofilkammern unterteilt. Die Dichtungswirkung und die Dämpfungswirkung wirken auch bei dieser Dichtungsanordnung in der gleichen Richtung.

Aus der JP 11157340 A ist eine Dichtung mit schallisolierender Funktion bekannt. Hierzu wird eine Dichtungsanordnung an einer Fahrzeugtür vorgesehen, die einen Grundkörper besitzt, an dem einerseits ein Dichtungshohlprofil angeordnet ist und andererseits eine vorstehende Lippe, welche außenseitig an einer Karosserie anliegt. Die Lippe ist aus einem Moosgummi ausgebildet, wobei die Lippe einen langgezogenen Kern aus einem härteren Material besitzt, welcher den Dichtungsspalt überbrückt und durch die Materialwahl eine bessere Schallisolierung erzeugen soll. Die Dämpfung eines Aufschlages ist bei dieser Dichtung nicht vorgesehen.

Ferner ist es ganz allgemein bekannt, dass beim Auffahren eines bewegten auf ein feststehendes Bauteil, insbesondere bei Kraftfahrzeugen, dämpfende Anschläge notwendig sind. Hierfür werden im Stand der Technik separate Bauteile, wie Dämpfungselemente, Puffer, Filze etc. verwendet. Insbesondere bei manuell betätigten Sonnenschutzsystemen (Rollo, Schiebehimmel, ect.) wird in der Stellung "geöffnet" und "geschlossen" jeweils ein Anschlag benötigt, welcher in der Führungsschiene (Gummipuffer, etc.) oder am Sonnenschutzsystem, z. B. am Rollospriegel oder Schiebehimmel als Gummipuffer, Hohlkammerdichtung ect. angebracht ist. Insbesondere werden auch bei Windabweisern teilweise separate Anschlagpuffer an der Unterseite angebracht, um im Windabweiserkasten nicht anzuschlagen.

Hierbei ist von Nachteil, dass zusätzliche Bauteile und zusätzliche Montageschritte notwendig sind. Ferner ist ein LogistikAufwand (Materialbeschaffung, Zeichnungsverwaltung etc.) notwendig, der einen nicht zu unterschätzenden Kostenanteil darstellt.

Die gattungsgemäße EP 0 976 596 beschreibt ein Fahrzeugdach mit einem eine Öffnung in einer festen Dachhaut verschließenden Deckel, der verschiebbar ist, um die Öffnung mindestens teilweise freizugeben, sowie einem Dichtungselement, das dachfest angebracht ist und bei geschlossenem Deckel von unten im Bereich der Deckelvorderkante anliegt, um den Fahrzeuginnenraum abzudichten und mit einem Sensor, welcher dafür eingerichtet ist, ein Einklemmen eines Gegenstands zwischen Deckelvorderkante und vorderem Öffnungsrand zu erfassen.

DE 39 21 381 beschreibt eine Dichtleiste für eine bewegliche Fensterscheibe eines Fensters, mit einem Körper aus flexiblem Material, welcher einen Kanal zur Aufnahme der Fensterscheibe definiert, wobei die Wand auf der einen Seite des Kanals an der Fensterscheibe anliegt und die Wand verglichen mit der Dicke der Fensterscheibe relativ dünn und mit einem Verstärkungsträger aus Metall verstärkt ist, der im wesentlichen eben ausgebildet ist und den Rand der Fensterscheibe übergreift.

Gemäß der vorliegenden Erfindung werden zwei Vorrichtungen zum Dichten und Dämpfen bereit gestellt, welche in den unabhängigen Ansprüchen 1 und 2 definiert werden.

Weitere vorteilhafte Merkmale werden in den abhängigen Unteransprüchen definiert.

Aufgabe der Erfindung ist es, die Anzahl der Bauteile zu vermindern und die Montage zu beschleunigen und zu vereinfachen und den Logistikaufwand zu verringern.

Die Aufgabe wird dadurch gelöst, dass die Dichtungsfunktion und die Dämpfungsfunktion in einer einzigen Dämpfungs- und Dichtungsvorrichtung vereint werden, wobei hierbei eine bereits vorgesehene bzw. vorhandene Dichtung, die aus einer anderen Funktion heraus benötigt wird, zusätzlich als dämpfender Anschlag für ein sich bewegendes System ausgebildet ist.

Die Vorrichtung umfasst somit zwei Einrichtungen für unterschiedliche Funktionen und für das Zusammenwirken mit unterschiedlichen Bauteilen, nämlich eine Dichtungseinrichtung zum Abdichten eines Spalts zwischen dem die Vorrichtung tragendem Bauteil und einem weiteren Bauteil, sowie eine Dämpfungseinrichtung zur Dämpfung des Auftreffens eines dritten Bauteils, auf das die Vorrichtung tragende Bauteil.

Die Dämpfung kann hierbei vorteilhafterweise durch ein Hohlkammerprofil, ein Vollmoosgummiprofil oder eine Lippe erfolgen, die ggf. mit einem verjüngten Bereich an der Vorrichtung angebunden ist und partiell entfernt werden kann. Die Dichtungseinrichtung an einer solchen Vorrichtung kann eine sogenannte Topdichtung, eine Wasserrinnendichtung, eine Akustikdichtung an einem Rahmenteil vorne oder hinten sein oder auch eine Dichtung an einem Windabweiser sein. Die Dichtungseinrichtung und die Dämpfungseinrichtung können unabhängig voneinander ausgebildet sein, so dass die unterschiedlichsten Dichtungs- oder Dämpfungsprofile miteinander kombinierbar sind. Insbesondere fallen bei der erfindungsgemäßen Vorrichtung die Arbeitsrichtung der Dichtung und die Arbeitsrichtung der Dämpfung nicht zusammen. Beispielsweise besitzt die Vorrichtung eine Befestigungseinrichtung zum Befestigen der Vorrichtung an einem ersten, die Vorrichtung tragenden Bauteil. Diese Befestigungseinrichtung ist beispielsweise eine an sich bekannte Befestigungseinrichtung aus einem elastischen Kunststoff mit einem Steckschlitz und einem den Steckschlitz umgebenden in den Kunststoff eingebetteten Träger, beispielsweise aus einem Metall. Die Befestigungseinrichtung besitzt somit drei nach außen weisende Seitenwandungen, wobei auf einer Seitenwandung die Dichtungseinrichtung, beispielsweise ein Hohlkammerprofil, und an einer der anderen Seite die Dämpfungseinrichtung, beispielsweise ebenfalls ein Hohlkammerprofil, angebracht sind.

Bei der Erfindung ist von Vorteil, dass durch eine erfindungsgemäße Vorrichtung die Anzahl der Montageschritte durch eine Reduzierung der Bauteile verringert wird. Hierdurch ist eine Kostenreduktion möglich. Zudem lässt sich durch die einstückige Ausbildung der Dichtung und der Dämpfung auch eine Bauraumreduktion verwirklichen.

Die Erfindung wird anhand einer Zeichnung beispielhaft erläutert. Es zeigen dabei:
- Figur 1:: eine erste Ausführungsform der erfindungsgemäßen Vor- richtung zum Dichten und Dämpfen im Querschnitt, wobei die Dämpfungseinrichtung und die Dichtungseinrichtung je als Hohlkammerprofil ausgebildet ist;
- Figur 2:: eine weitere Ausführungsform der erfindungsgemäßen Vor- richtung zum Dichten und Dämpfen im Querschnitt, wobei die Dichtungseinrichtung als Hohlkammerprofil und die Dämpfungseinrichtung als Dämpfungslippe ausgebildet ist;
- Figur 3:: eine weitere Ausführungsform der erfindungsgemäßen Vor- richtung zum Dichten und Dämpfen im Querschnitt, wobei die Dichtungseinrichtung als Dichtungslippe und die Dämpfungseinrichtung als Dämpfungswulst ausgebildet ist;
- Figur 4:: eine weitere Ausführungsform der erfindungsgemäßen Vor- richtung zum Dichten und Dämpfen im Querschnitt, wobei die Dichtungseinrichtung als Dichtungslippe und die Dämpfungseinrichtung als Vollprofil ausgebildet ist;
- Figur 5:: eine weitere Ausführungsform der erfindungsgemäßen Vor- richtung zum Dichten und Dämpfen im Querschnitt anhand eines Windabweisers als Einsatz.

Eine erfindungsgemäße Vorrichtung 1 besitzt eine Befestigungseinrichtung 2, eine Dichtungseinrichtung 3 und eine Dämpfungseinrichtung 4.

Die Befestigungseinrichtung 2 ist beispielsweise im Querschnitt kastenartig mit zwei gegenüberliegenden Breitseitenwandungen 5, 6 und zwei sich gegenüberliegenden Schmalseitenwandungen 7, 8 ausgebildet, wobei von einer Schmalseitenwandung 8 her, ein Steckschlitz 9 in die Befestigungseinrichtung 2 eingebracht ist. Eine Innenwandung 10 ist konturiert ausgebildet und besitzt beispielsweise im Querschnitt hakenartige Elemente 11, um eine Haftung der Befestigungseinrichtung 2 an einem Karosseriefalz (nicht gezeigt) zu gewährleisten. Die Breite des Schlitzes 9 entspricht dabei in etwa der Breite eines Karosseriefalzes oder ist etwas schmaler. Zwischen der Innenwandung 10 und den Seitenwandungen 6, 7 ist in das die Befestigungseinrichtung 2 ausbildende Material in an sich bekannter Weise ein Träger 12 eingebracht. Der Träger 12 erstreckt sich vorzugsweise über die Länge der Befestigungseinrichtung 2 und dient der Formbeständigkeit der Befestigungseinrichtung 2 und insbesondere dem sicheren Halt der Befestigungseinrichtung 2 an einem Karosserieflansch oder Karosseriefalz.

Die Befestigungseinrichtung 2 ist in an sich bekannter Weise aus einem hartelastischen Kunststoff, insbesondere einem harten Gummi ausgebildet.

Entlang einer Breitseitenwandung 5 der Befestigungseinrichtung 2 ist ein Hohlprofil als Dichtungseinrichtung 3 angeformt. Die Dichtungseinrichtung 3 besitzt eine Hohlprofilkammer 13 und eine die Hohlprofilkammer 13 begrenzende Dichtungswandung 14. Die Dichtungswandung 24 ist insbesondere dom- oder kuppelartig ausgebildet, wobei im Bereich des Scheitels eine zusätzliche Dichtlippe 15 vorgesehen sein kann. Die Dichtungswandung 14 ist aus einem weichelastischen Kunststoffmaterial ausgebildet und insbesondere aus einem weichelastischen Gummi ausgebildet und entlang der Seitenwandung 5 der Befestigungseinrichtung 2 an dieser beispielsweise durch Vulkanisieren befestigt.

Entlang einer Schmalseitenwandung 7, die zur Breitseitenwandung 5 im Wesentlichen senkrecht verläuft, ist die Dämpfungseinrichtung 4 angeordnet. Die Dämpfungseinrichtung 4 ist als Hohlprofil ausgebildet und besitzt eine Hohlkammer 16, die nach außen von einer Dämpfungswandung 17 begrenzt wird. Benachbart zur Seitenwandung 7 besitzt die Dämpfungseinrichtung 4 eine Bodenwandung 18, welche mit der Dämpfungswandung 17 einstückig ausgebildet ist. Die Dämpfungswandung 17 und die Bodenwandung 18 sind beispielsweise aus einem weichelastischen Kunststoff, insbesondere einem weichelastischen Gummi ausgebildet, wobei die Dämpfungseinrichtung 4 mit der Bodenwandung 18 entlang der Seitenwandung 7 an dieser, beispielsweise durch Vulkanisieren, befestigt ist.

Die Dämpfungswandung 17 ist ebenfalls flach kuppelartig bzw. domartig ausgebildet und besitzt im Scheitelbereich innenseitig Dämpfungslippen bzw. Dämpfungsstreifen 19 insbesondere zwei nebeneinanderliegende Dämpfungsstreifen 19. Bei einer Beaufschlagung der Dämpfungswandung 17 von außen, beispielsweise durch einen Rollospriegel 20, werden die Dämpfungsstreifen 19 auf die Bodenwandung 18 zubewegt und dämpfen durch Kontakt mit der Bodenwandung 18 und Verformung den Aufprall des Rollospriegels 20 auf der Dämpfungswandung 17 zusätzlich. Die Dichtungswandung 14 und die Dämpfungswandung 17 bzw. die Bodenwandung 18 können über einen Verbindungsabschnitt 21 entlang der Befestigungseinrichtung 2 miteinander verbunden sein. Dies ermöglicht eine gemeinsame Extrusion der beiden Einrichtungen 3, 4.

Alternativ können die Dichtungseinrichtung 3 und/oder die Dämpfungseinrichtung 4 anstelle der Hohlprofile aus Vollprofilen oder insbesondere Moosgummivollprofilen ausgebildet sein. Bei einer weiteren vorteilhaften Ausführungsform sind die Dichtungswandung 14 und die Dämpfungswandung 17 aus einem dichten, elastischen Kunststoffmaterial, insbesondere einem Gummi, ausgebildet. Die Hohlkammern 13, 16 sind mit einem weichelastischen, geschäumten Kunststoffmaterial beispielsweise einem Moosgummi gefüllt.

Um eine Dichtung herbeizuführen, das heißt, dass die Dichtungswandung 14 an einem Bauteil dichtend anliegt, wird die Dichtungseinrichtung 3 entlang einer Arbeitsrichtung (Pfeil 22) verformt und liegt durch die Elastizität bzw. elastische Rückstellkraft an einem Bauteil (nicht gezeigt) insbesondere mit der Dichtlippe 15 dichtend an.

Um eine Dämpfungswirkung zu erzielen, insbesondere eine Dämpfung des Anschlages eines Rollospriegels 20 an einem Bauteil auf das die Vorrichtung 1 mit dem Steckschlitz 9 aufgesteckt ist, verformt sich die Dämpfungswandung 17 hin zur Bodenwandung 18 bzw. zur Seitenwandung 7 entlang einer Arbeitsrichtung (Pfeil 23) zu. Die Arbeitsrichtungen 22, 23 stehen in etwa senkrecht zueinander.

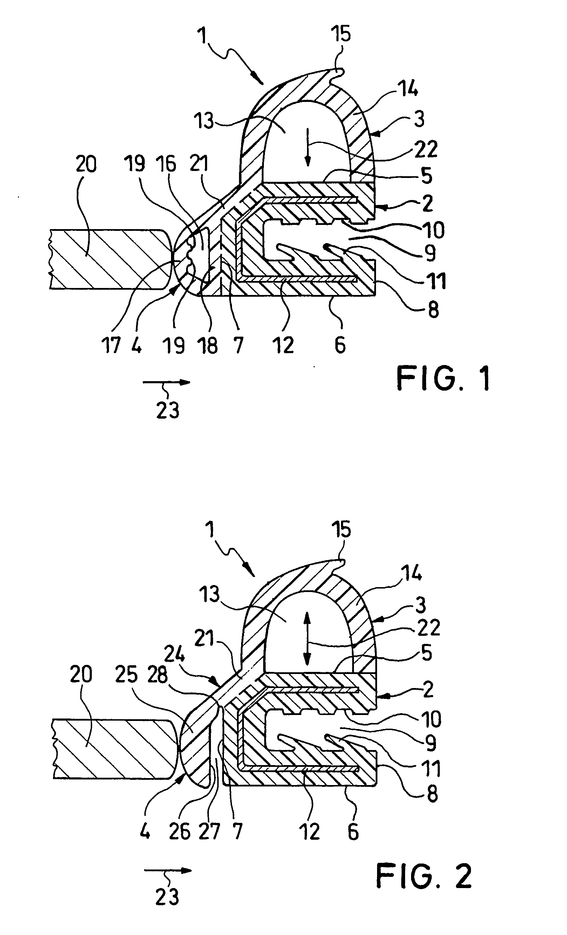

Bei einer weiteren vorteilhaften Ausführungsform (Figur 2) ist die Dämpfungseinrichtung 4 nicht als Hohlprofil ausgebildet, wobei sonst gleiche Teile mit gleichen Bezugszeichen versehen sind. Bei dieser Ausführungsform ist die Dämpfungseinrichtung 4 im Bereich eines Anbindungsbereichs 24 der Seitenwandung 7 der Befestigungseinrichung 2 bzw. im Bereich des Verbindungsabschnitts 21 zwischen der Dichtungseinrichtung 3 und der Dämpfungseinrichtung 4 lappenartig angebunden. Hierbei ist die Dämpfungseinrichtung 4 als Dämpfungslippe oder Dämpfungswulst 25 ausgebildet. Der Dämpfungswulst 25 ist mit einem Spalt 27 von der Seitenwandung 7 beabstandet angeordnet. Durch die Elastizität im Seitenkanten- bzw. Anbindungsbereich 24 ist im nicht belasteten Zustand des Dämpfungswulstes 25, der Spalt 27 vorhanden. Bei einer Beaufschlagung, beispielsweise durch einen Rollospriegel 20 wird entlang der Arbeitsrichtung 23 gegen die elastischen Rückstellkräfte des Materials im Bereich des Anbindungsbereichs 24 eine Bodenseite 26 der Dämpfungswulst 25 auf die Seitenwandung 7 zu bewegt. Nach dem Anschlag der Bodenseite 26 auf die Seitenwandung 7 findet die Dämpfung durch die elastische Verformung des Dämpfungswulstes 25 statt.

Vorteilhafterweise befindet sich im Bereich des Grundes des Spaltes 27 bzw. im Anbindungsbereich 24 eine Soll-Bruchstelle 28 in Form einer Materialverjüngung im Anbindungsbereich 24. Hierdurch ist es möglich, den Dichtungswulst 25 in den Bereichen in denen er nicht gewünscht ist, einzuschneiden und von der Befestigungseinrichtung 2 abzureißen. Somit ist es möglich, beispielsweise bei einem Rollospriegel 20 nur an den äußeren Endbereichen des Rollospriegels 20, Dämpfungswulste 25 als Anschlagelemente vorzusehen. Der Dämpfungswulst 25 kann sowohl aus einem etwas härterem, dichten elastischen Kunststoffmaterial, wie einem Gummi als auch einem geschäumten Kunststoff, insbesondere einem Moosgummi ausgebildet sein.

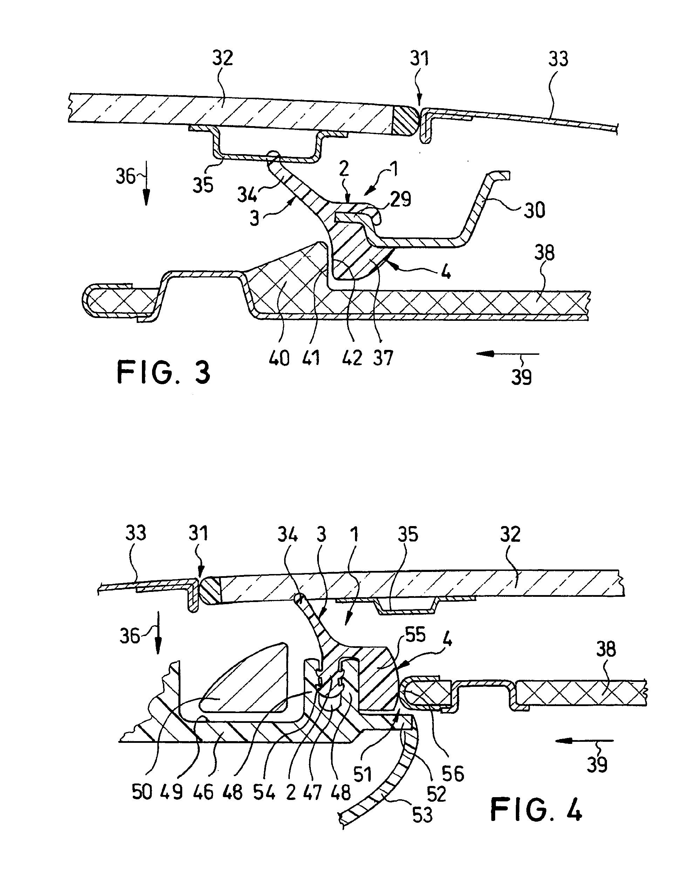

Bei einer weiteren vorteilhaften Ausführungsform (Figur 3) ist die Vorrichtung 1 zum Dichten und Dämpfen im Bereich einer Wasserrinne 30 eines Schiebedachs angeordnet. Die Vorrichtung 1 verfügt über die Befestigungseinrichtung 2, die Dichtungseinrichtung 3 und die Dämpfungseinrichtung 4. Die Befestigungseinrichtung 2, die Dichtungseinrichtung 3 sowie die Dämpfungseinrichtung 4 sind hierbei einstückig ausgebildet, wobei die Befestigungseinrichtung 2 über eine Längskante 29 einer Wasserrinne 30 geschoben angeordnet ist. Die Wasserrinne 30 ist hierbei beispielsweise unterhalb eines Stoßbereichs 31 zwischen einem Glasdach 32 und einer Dachhaut 33 eines Kraftfahrzeuges angeordnet. Die Wasserrinne 30 verläuft dabei unterhalb des Stoßbereichs 31 über die Länge des Stoßbereichs 31, um durch den Stoßbereich 31 hindurchtretendes Wasser aufzufangen und abzuleiten.

Von der Befestigungseinrichtung 2 steht in Richtung zum Glasdach 32, die Dichtungseinrichtung 3 in Form einer Dichtlippe 34 oder Dichtleiste 34 vor. Unterhalb des Glasdachs 32 ist eine Leiste 35 vorhanden, welche nach unten über das Glasdach 32 vorsteht und in geschlossenem Zustand des Glasdaches mit der Dichtlippe 34 oder Dichtleiste 34 dichtend zusammenwirkt. Die Leiste 35 des Glasdachs 32 verbiegt hierbei die Dichtlippe 34 entlang der Arbeitsrichtung (Pfeil 36) der Dichtlippe 34, so dass die Dichtlippe 34 mit einem Teilbereich unter Druck und somit dichtend an einer Unterseite der Leiste 35 anliegt.

Über die Wasserrinne 30 nach unten vorstehend erstreckt sich von der Befestigungseinrichtung 2 die Dämpfungseinrichtung 4 weg.

Die Dämpfungseinrichtung 4 ist hierbei als Dämpfungsleiste 37 oder Dämpfungswulst 37 ausgebildet. Der Dämpfungswulst 37 dient beispielsweise der Dämpfung des Anschlags eines Schiebehimmels 38, der sich unterhalb der Wasserrinne 30 und unterhalb des Glasdaches 32 befindet. Der Schiebehimmel 38 ist entlang einer zum Schiebedach 32 z. B. parallelen Richtung 39 (Pfeil 39) bewegbar. Zur Wasserrinne 30 hin bzw. zum Dämpfungswulst 37 hin besitzt der Schiebehimmel 38 einen Anschlag 40. Der Anschlag 40 besitzt eine Anschlagsfläche 41, die mit einer Dämpfungsfläche 42 des Dämpfungswulstes 37 zusammenwirkt. Die Anschlagfläche 41 und die Dämpfungsfläche 42 sind dabei senkrecht oder geneigt zur Bewegungsrichtung 39 angeordnet. Die Bewegungsrichtung 39 des Schiebehimmels 38 entspricht hierbei auch der Arbeitsrichtung des Dämpfungswulstes 37. Bei dieser Ausführungsform stehen somit die Arbeitsrichtungen 36 bzw. Kompressionsrichtung 36 der Dichtungseinrichtung 3 und die Arbeitsrichtung bzw. Kompressionsrichtung (Pfeil 34) der Dämpfungseinrichtung 4 im Wesentlichen senkrecht zueinander. Das heißt, dass die Arbeitsrichtungen der Dichtungseinrichtung 3 und der Dämpfungseinrichtung 4 nicht zusammenfallen.

Bei einer weiteren Ausführungsform (Figur 4) ist die Vorrichtung zum Dichten und Dämpfen 1 zur Akustikdichtung an einem vorderen Rahmenteil 46 für einen Schiebehimmel 38 angeordnet. Hierzu ist am Rahmenteil 46 eine Aufnahmenut 47 vorgesehen, die sich mit Nutwandungen 48 zu einem Glasdach 32 hin erstreckt. Die Aufnahmenut 47 ist benachbart zu einem Windabweiser 50 und/oder einer Wasserrinne 49 angeordnet, welche unterhalb des Stoßbereichs 31 zwischen dem Glasdach 32 und einer Dachhaut 33 des Kraftfahrzeuges angeordnet ist. Die Wasserrinne 49 beherbergt den Windabweiser 50, welcher so angeordnet ist, dass er, nachdem das Glasdach 32 vom Stoßbereich 31 wegbewegt wurde, nach oben aus der vom Glasdach 32 bedeckten Öffnung zumindest teilbereichsweise herausbewegbar ist und dabei vorzugsweise eng benachbart oder anstoßend zur Dachhaut 33 angeordnet ist.

Der Wasserrinne 49 gegenüberliegend ist im Bereich einer Nutwandung 48 ein Stoßbereich 51 für den Schiebehimmel 38 vorgesehen. Benachbart zur Wandung 48 ist im Stoßbereich 51 ein Bodenwandungsabschnitt 52 des Rahmenteils 46 angeordnet, an der ein Fahrzeugsfesthimmel 53 befestigt ist. Die Vorrichtung zum Dichten und Dämpfen 1 besitzt die Befestigungseinrichtung 2, welche als in die Aufnahmenut 47 einsteckbare Befestigungsleiste ausgebildet ist, wobei in Längsseitenbereichen der Befestigungseinrichtung 2 Profilierungen 54 beispielsweise Lamellen oder Lippen vorhanden sind.

Oberhalb der Aufnahmenut 47 erstreckt sich nach oben und in Richtung zum Stoßbereich 31 die Dichtungseinrichtung 3 in Form einer Dichtleiste 34 oder Dichtlippe 34, welche so angeordnet ist, dass sie bei geschlossenem Glasdach 32 von unten mit Pressung an dem Glasdach 32 dichtend anliegt.

Bezüglich der Aufnahmenut 47 ist an der Befestigungseinrichtung 2, der Dichtungseinrichtung 3 gegenüberliegend, die Dämpfungseinrichtung 4 angeordnet, wobei die Dämpfungseinrichtung 4 ein über eine Nutwandung 48 übergreifender und in den Stoßbereich 51 hineinragender Dämpfungswulst 55 ist, welcher sich von einer Oberkante der entsprechenden Nutwandung 48 in Richtung zur Bodenwandung 52 erstreckt und sich von der Nutwandung 48, an der er anliegt, in Richtung zu einer vorderen Stoßkante 56 des Schiebehimmels 38 erstreckt. Der Schiebehimmel 38 stößt somit mit seiner vorderen abschließenden Stoßkante 56 an dem Dämpfungswulst 55 an.

Beim Zuschieben des Glasdaches 32 wird die Dichtlippe 34 der Dichtungseinrichtung 3 entsprechend dem Pfeil 36 im Wesentlichen vertikal verschoben bzw. verbogen, so dass eine im Wesentlichen vertikale Arbeitsrichtung 36 vorliegt. Der Dämpfungswulst 55 bewirkt eine Anschlagsdämpfung in der Bewegungsrichtung 39 des Schiebehimmels 38, die im Wesentlichen horizontal verläuft, so dass auch bei dieser Ausführungsform die Arbeitsrichtungen 36, 39 nicht zusammenfallen. Der Dämpfungswulst 55 kann hierbei ebenso wie bei anderen Ausführungsformen aus Moosgummivollmaterial oder aus vergleichbaren Materialien oder als Hohlprofil oder als Dämpfungswulst ausgebildet sein. Die Dichtlippe 34 kann auch nach oben, von der Aufnahmenut wegweisend als Hohlprofil oder Vollprofil aus den entsprechenden Materialien ausgebildet sein.

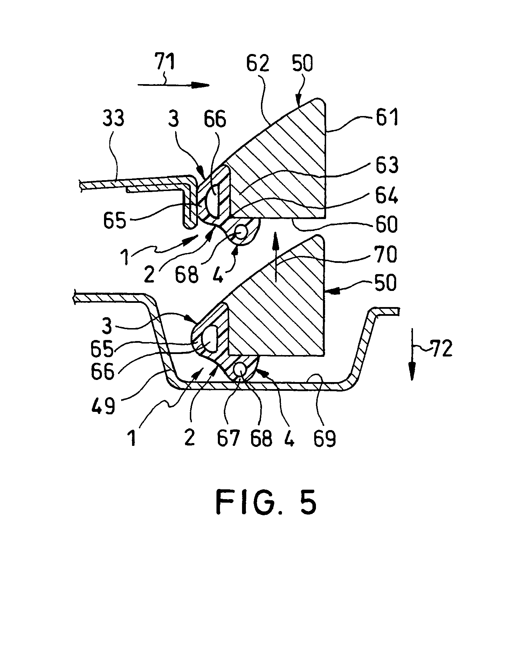

Bei einer weiteren vorteilhaften Ausführungsform (Figur 5), bei der gleiche Teile mit gleichen Bezugszeichen versehen sind, ist die Vorrichtung zum Dichten und Dämpfen 1 an dem Windabweiser 50 angeordnet.

Der Windabweiser 50 ist beispielsweise eine im Querschnitt im Wesentlichen dreieckförmige, sich über die Breite einer Dachöffnung erstreckende Leiste, wobei diese Leiste eine Basis 60, eine von der Basis 60 sich vertikal nach oben erstreckende Rückseitenwandung 61 und eine die vertikale Rückseitenwandung 61 und die horizontale Basis 60 verbindende, dem Fahrtwind zuweisende, geneigte Abweiserfläche 62 besitzt. In einem Bereich 63, in dem sich die Abweiserfläche 62 und die Basis 60 treffen, ist der Windabweiser 50 beispielsweise so ausgebildet, dass die Abweiserfläche 62 von der Basis 60 zunächst senkrecht ansteigt und dann in die geneigte Abweiserfläche 62 übergeht. Hierdurch wird eine rechtwinklig eingefasste vordere, untere Kante 64 gebildet. Im Bereich der vorderen, unteren Kante 64 ist an die Basis 60 angrenzend die Vorrichtung zum Dichten und Dämpfen 1 angeordnet.

Die Vorrichtung zum Dichten und Dämpfen 1 besitzt im Bereich der vorderen, unteren Kante 64 die Befestigungseinrichtung 2, welche zum Verlauf der Kante 64 korrespondierend ausgebildet ist. Von der Befestigungseinrichtung 2 vorstehend ist die Dichtungseinrichtung 3 angeordnet. Die Dichtungseinrichtung 3 ist ein Hohlprofil mit einer vorstehenden Dichtungswandung 65 sowie einer Hohlkammer 66. Unterhalb der Basis 60 ist nach unten weisend die Dämpfungseinrichtung 4 angeordnet. Die Dämpfungseinrichtung 4 ist ebenfalls als Hohlprofil mit einer Dämpfungswandung 67 ausgebildet und hat eine von der Dämpfungswandung 67 und der Befestigungseinrichtung 2 begrenzte Kammer 68. Zur Befestigung am Windabweiser 50 wird die Vorrichtung zum Dichten und Dämpfen 1 beispielsweise auf den Windabweiser 50 aufgeklebt.

In einem geschlossenen Zustand des Schiebedachs (nicht gezeigt) ist der Windabweiser 50 in der Wasserrinne 49 mit der Dämpfungseinrichtung 4 bzw. der Dämpfungswandung 67 an einem Boden 69 der Wasserrinne 49 aufliegend angeordnet. Wird ein Schiebedach, wie z. B. ein Glasschiebedach geöffnet, wird der Windabweiser 50 mit einer entsprechenden Vorrichtung (nicht gezeigt) aus der Wasserrinne 49 in der Pfeilrichtung 70 nach oben bewegt, bis die Dichtungswandung 65 vorderseitig an der Dachhaut 33 anliegt. Hierbei wird die Dichtungseinrichtung 3 in der Pfeilrichtung 71 verformt. Diese entspricht der Arbeitsrichtung der Dichtungseinrichtung 3. Wird der Windabweiser 50 beim Schließen eines Daches wieder eingefahren, schlägt er mit der Wandung 67 der Dämpfungseinrichtung 4 am Boden 69 der Wasserrinne 49 an. Die Arbeitsrichtung der Dämpfungseinrichtung 4 entspricht somit etwa der Pfeilrichtung 72. Auch bei dieser Ausführungsform stimmen die Arbeitsrichtungen der Dichtungseinrichtung 3 (Pfeilrichtung 71) und der Dämpfungseinrichtung 4 (Pfeilrichtung 72) somit nicht überein. Die Dämpfungseinrichtung 4 und die Dichtungseinrichtung 3 können bei dieser Ausführungsform selbstverständlich auch als Vollprofile aus Moosgummi oder ähnlichen Kunststoffen ausgebildet sein.

Bei der Erfindung ist von Vorteil, dass eine Dichtungsfunktion und eine Dämpfungsfunktion mit einem einzigen Bauteil gewährleistet werden, wobei bei einer entsprechenden Auslegung der Konstruktion der bewegten Teile auch eine Verringerung des Bauraums erzielt werden kann.

Die Dämpfungseinrichtung 4 kann sich hierbei beispielsweise über die gesamte Länge der Dichtungseinrichtung 3 und der Befestigungseinrichtung 2 erstrecken. Hierdurch können vorteilhafterweise die Einrichtungen gemeinsam beispielsweise durch Extrusion als Extrusionsstrang hergestellt werden und entsprechend zugeschnitten und an der Befestigungseinrichtung 2 angeordnet werden. Die Befestigungseinrichtung 2 kann jedoch selbstverständlich auch mit der Dichtungseinrichtung 3 und der Dämpfungseinrichtung 4 einstückig ausgebildet und hergestellt werden.

Darüber hinaus ist es möglich, die Dämpfungseinrichtung 4 auch nur an bestimmten Stellen, vorzugsweise an den äußeren Enden der Befestigungseinrichtung 2 und/oder Dichtungseinrichtung 3 vorzusehen. Hierzu kann die Dämpfungseinrichtung 4 insbesondere als mit einer Soll-Bruchstelle an der Befestigungseinrichtung 2 angebundene Lippe mit einem Dämpfungswulst ausgebildet sein, so dass die Dämpfungseinrichtung 4 in einfacher Art und Weise bereichsweise abgetrennt werden kann.

Die Befestigungseinrichtung 2 kann, wie beschrieben, ein separates Bauteil sein, sie kann aber auch einstückig mit der Dichtungseinrichtung 3 und der Dämpfungseinrichtung 4 verbunden sein. Die Befestigungseinrichtung 2 kann im einfachsten Fall die Dichtungseinrichtung 3 und die Dämpfungseinrichtung 4 beispielsweise nach Art eines Winkelprofils miteinander verbinden.

Allen Ausführungsformen der Erfindung ist gemeinsam, dass die Arbeitsrichtungen, d. h. die Kompressionsrichtungen der Dichtungseinrichtung 3 und der Dämpfungseinrichtung 4 nicht zusammenfallen. Die Kompressionsrichtungen der Dämpfungseinrichtung 4 und der Dichtungseinrichtung 3 können beispielsweise rechtwinklig aufeinander stehen. Sie können aber auch 180° zueinander betragen, das heißt in der gleichen Ebene liegen aber mit gegensätzlicher Orientierung.

Die Erfindung ist nicht auf den Bereich von Schiebedächern beschränkt. Weitere sinnvolle Einsatzbereiche können Türen und Fenster, sowie der Kofferraumbereich sein. Beispielsweise kann eine schwenkbare Hutablage heckenklappenseitig auf einer Dämpfungseinrichtung der Heckklappen-Scheibendichtung anliegen. Ferner kann der Anschlag eines Sonnenschutzrollos an einem Fahrzeugseiten- oder Heckfenster ebenfalls an einer erfindungsgemäße Vorrichtung anliegen oder anstoßen.

### Bezugszeichenliste:

- 1: Vorrichtung zum Dichten und Dämpfen
- 2: Befestigungseinrichtung
- 3: Dichtungseinrichtung
- 4: Dämpfungseinrichtung
- 5: Breitseitenwandung von 2
- 6: Breitseitenwandung von 2
- 7: Breitseitenwandung von 2
- 8: Breitseitenwandung von 2
- 9: Steckschlitz
- 10: Innenwandung von 2
- 11: Hakenprofile
- 12: Träger
- 13: Hohlprofilkammer
- 14: Dichtungswandung
- 15: Dämpfungsstreifen 19
- 16: Hohlkammer
- 17: Dämpfungswandung
- 18: Bodenwandung
- 19: Lippen
- 20: Rollospriegel
- 21: Verbindungsabschnitt
- 22: Arbeitsrichtung von 3
- 23: Arbeitsrichtung von 4
- 24: Anbindungsbereich
- 25: Dämpfungswulst
- 26: Bodenseite
- 27: Spalt
- 28: Soll-Bruchstelle
- 29: Längskante
- 30: Wasserrinne
- 31: Stoßbereich
- 32: Glasdach
- 33: Dachhaut
- 34: Dichtlippe
- 35: Leiste von 32
- 36: Arbeitsrichtung
- 37: Dämpfungswulst
- 38: Schiebehimmel
- 39: Bewegungsrichtung
- 40: Anschlag
- 41: Anschlagsfläche
- 42: Dämpfungsfläche
- 43:
- 44:
- 45:
- 46: vorderes Rahmenteil
- 47: Aufnahmenut
- 48: Nutwandung
- 49: Wasserrinne
- 50: Windabweiser
- 51: Stoßbereich
- 52: Bodenwandung
- 53: Fahrzeugfesthimmel
- 54: Profilierungen
- 55: Dämpfungswulst
- 56: Stoßkante
- 57:
- 58:
- 59: Wasserrinne
- 60: Basis
- 61: Rückseitenwandung
- 62: Abweiserfläche
- 63: Bereich
- 64: untere Kante
- 65: Dichtungswandung
- 66: Hohlkammer
- 67: Dämpfungswandung
- 68: Kammer
- 69: Boden
- 70: Arbeitsrichtung von 50
- 71: Arbeitsrichtung von 3
- 72: Arbeitsrichtung von 4

## Patentansprüche

1. Vorrichtung zum Dichten und Dämpfen (1) mit einer Befestigungseinrichtung (2) zum Befestigen der Vorrichtung (1) an einem ersten Bauteil und einer Dichtungseinrichtung (3) zum Abdichten des ersten Bauteils gegen ein zweites Bauteil und einer Dämpfungseinrichtung (4) zum Dämpfen des Anschlags eines dritten Bauteils an dem ersten Bauteil.
**dadurch gekennzeichnet, dass** die Vorrichtung (1) ausgebildet ist:
a) als Topdichtung mit der Dämpfungseinrichtung (4) zum Dämpfen des Anschlags eines Rollospriegels (20); oder
b) als Wasserrinnendichtung an einer Wasserrinne (30) mit der Dämpfungseinrichtung (4) zum Dämpfen des Anschlags eines Schiebehimmels (38).

2. Vorrichtung zum Dichten und Dämpfen (1) mit einer Befestigungseinrichtung (2) zum Befestigen der Vorrichtung (1) an einem ersten Bauteil und einer Dichtungseinrichtung (3) zum Abdichten des ersten Bauteils gegen ein zweites Bauteil und einer Dämpfungseinrichtung (4) zum Dämpfen des Anschlags des ersten Bauteils an einem dritten Bauteil,
**dadurch gekennzeichnet, dass**
die Vorrichtung (1) als Windabweiserdichtung mit der Dämpfungseinrichtung (4) zum Dämpfen des Anschlags des Windabweisers (50) in einer Windabweiserrinne (49) ausgebildet ist.

3. Vorrichtung nach Anspruch 1 oder 2, **dadurch gekennzeichnet, dass** die Arbeitsrichtung (22, 36, 71) der Dichtungseinrichtung (3) und die Arbeitsrichtung (22, 39, 72) der Dämpfungseinrichtung (4) nicht zusammenfallen.

4. Vorrichtung nach einem der vorhergehenden Ansprüche, **dadurch gekennzeichnet, dass** die Dichtungseinrichtung (3) und/oder die Dämpfungseinrichtung (4) ein Hohlkammerprofil aus einem elastischen Kunststoff oder ein Vollprofil aus einem elastischen Kunststoff und/oder eine Lippe aus einem elastischen Kunststoff ist.

5. Vorrichtung nach einem der vorhergehenden Ansprüche, **dadurch gekennzeichnet, dass** die Dämpfungseinrichtung (4) als Dämpfungslippe (25) oder Dämpfungswulst (25) ausgebildet ist, der mit einem verjüngten Anbindungsbereich (24) und einer Soll-Bruchstelle (28) an der Befestigungseinrichtung (2) angebunden ist.

6. Vorrichtung nach einem der vorhergehenden Ansprüche, **dadurch gekennzeichnet, dass** die Dämpfungseinrichtung (4) über die gesamte Länge oder Teillängen der Vorrichtung (1) zur Bildung einer einzigen oder mehrerer Dämpfungseinrichtungen (4) ausgebildet ist.

7. Vorrichtung nach Anspruch 1, **dadurch gekennzeichnet, dass** die Vorrichtung (1) als Akustikdichtung an einem Rahmenteil (46) einer Schiebedachkonstruktion mit der Dämpfungseinrichtung (4) zum Dämpfen des Anschlags eines Schiebehimmels (38) ausgebildet ist.

## Claims

1. Apparatus for sealing and damping (1), with a fastening device (2) for fastening the apparatus (1) to a first component, and with a sealing device (3) for sealing off the first component from a second component, and with a damping device (4) for damping the impact of a third component on the first component, **characterized in that** the apparatus (1) is designed:
a) as a top seal with the damping device (4) for damping the impact of a roller-blind bow (20); or
b) as a gutter seal on a gutter (30) with the damping device (4) for damping the impact of a sliding roof lining (38).

2. Apparatus for sealing and damping (1), with a fastening device (2) for fastening the apparatus (1) to a first component, and with a sealing device (3) for sealing off the first component from a second component, and with a damping device (4) for damping the impact of the first component on a third component, **characterized in that**
the apparatus (1) is designed as a wind deflector seal with the damping device (4) for damping the impact of the wind deflector (50) in a wind deflector channel (49).

3. Apparatus according to Claim 1 or 2, **characterized in that** the working direction (22, 36, 71) of the damping device (3) and the working direction (22, 39, 72) of the damping device (4) do not coincide.

4. Apparatus according to one of the preceding claims, **characterized in that** the sealing device (3) and/or the damping device (4) are/is a hollow chamber profile made from a flexible plastic or a solid profile made from a flexible plastic and/or a lip made from a flexible plastic.

5. Apparatus according to one of the preceding claims, **characterized in that** the damping device (4) is designed as a damping lip (25) or damping bead (25) which is joined to the fastening device (2) by a tapered joining region (24) and a predetermined breaking point (28).

6. Apparatus according to one of the preceding claims, **characterized in that** the damping device (4) is formed over the entire length or partial length of the apparatus (1) in order to form a single damping device (4) or a plurality of damping devices (4).

7. Apparatus according to Claim 1, **characterized in that** the apparatus (1) is designed as an acoustic seal on a frame part (46) of a sliding roof structure with the damping device (4) for damping the impact of a sliding roof lining (38).

## Revendications

1. Dispositif d'étanchéité et d'amortissement (1) comprenant un dispositif de fixation (2) pour la fixation du dispositif (1) sur un premier composant et un dispositif d'étanchéité (3) pour réaliser l'étanchéité du premier composant par rapport à un deuxième composant et un dispositif d'amortissement (4) pour l'amortissement de la butée d'un troisième composant contre le premier composant,
**caractérisé en ce que** le dispositif (1) est réalisé :
a) sous forme de joint d'étanchéité supérieur avec le dispositif d'amortissement (4) pour amortir la butée d'un arceau de store (20) ; ou
b) sous forme de joint d'étanchéité de rigole d'eau sur une rigole d'eau (30) avec le dispositif d'amortissement (4) pour amortir la butée d'un panneau de toit ouvrant (38).

2. Dispositif d'étanchéité et d'amortissement (1) comprenant un dispositif de fixation (2) pour la fixation du dispositif (1) sur un premier composant et un dispositif d'étanchéité (3) pour réaliser l'étanchéité du premier composant par rapport à un deuxième composant et un dispositif d'amortissement (4) pour l'amortissement de la butée d'un troisième composant contre le premier composant,
**caractérisé en ce que**
le dispositif (1) est réalisé sous forme de joint d'étanchéité déflecteur de vent avec le dispositif d'amortissement (4) pour amortir la butée du déflecteur de vent (50) dans une rigole de déflecteur de vent (49).

3. Dispositif selon la revendication 1 ou 2, **caractérisé en ce que** la direction de travail (22, 36, 71) du dispositif d'étanchéité (3) et la direction de travail (22, 39, 72) du dispositif d'amortissement (4) ne coïncident pas.

4. Dispositif selon l'une quelconque des revendications précédentes, **caractérisé en ce que** le dispositif d'étanchéité (3) et/ou le dispositif d'amortissement (4) est un profilé de chambre creuse en plastique élastique ou un profilé plein en plastique élastique et/ou une lèvre en plastique élastique.

5. Dispositif selon l'une quelconque des revendications précédentes, **caractérisé en ce que** le dispositif d'amortissement (4) est réalisé sous forme de lèvre d'étanchéité (25) ou de bourrelet d'amortissement (25), qui est raccordé à une région de liaison rétrécie (24) et un point destiné à la rupture (28) sur le dispositif de fixation (2).

6. Dispositif selon l'une quelconque des revendications précédentes, **caractérisé en ce que** le dispositif d'amortissement (4) est réalisé sur toute la longueur ou sur des longueurs partielles du dispositif (1) pour former un dispositif d'amortissement unique ou plusieurs dispositifs d'amortissement (4).

7. Dispositif selon la revendication 1, **caractérisé en ce que** le dispositif (1) est réalisé sous forme de joint d'étanchéité acoustique sur une partie de cadre (46) d'une construction de toit ouvrant avec le dispositif d'amortissement (4) pour amortir la butée d'un panneau de toit ouvrant (38).
